# FASCICULE DE BREVET EUROPEEN

(11) **EP 0 736 253 B1**
(45) Date de publication et mention de la délivrance du brevet: **08.03.2000**
(21) Numéro de dépôt: 96400678.7
(22) Date de dépôt: 29.03.1996
(51) Int. Cl.: A21B 3/00

(54) **Dispositif de raccordement de deux segments successifs d'un four tunnel de cuisson d'aliments**
Vorrichtung zur Verbindung von zwei aufeinanderfolgenden Segmenten eines Tunnelofens zum Kochen von Nahrungsmitteln
Device for connecting two successive segments of a tunnel-oven for cooking food products

(30) Priorité: 31.03.1995 FR 9503797
(43) Date de publication de la demande: 09.10.1996
(73) Titulaire: BONNET CIDELCEM GRANDE CUISINE, Mitry Mory (77292) (FR)
(72) Inventeur: Pinceloup, Didier, 69400 Villefranche sur Saone (FR)
(74) Mandataire: Boutin, Antoine

(56) Documents cités:
- WO-A-95/00021
- US-A- 4 245 613
- US-A- 4 764 108

## Description

La présente invention est relative aux fours de cuisson d'aliments à usage professionnel, en particulier aux fours tunnels de cuisson. Elle concerne plus précisément un dispositif de raccordement de deux segments successifs de tels fours. Un tel dispositif connu par US-A-4 764 108.

On connaît des tunnels de cuisson comportant une enceinte générale allongée divisée en une succession de sections de cuisson. Cette enceinte est à l'une de ses extrémités reliée à un sas d'entrée et à l'autre à un sas de sortie.

Les tunnels de cuisson sont avantageusement prévus pour une cuisson simultanée, mixte ou séparée en fonction des aliments à cuire, à l'aide de micro-ondes, d'air pulsé, de vapeur et de rayonnement infrarouge.

Chaque section dans la succession de sections se comporte comme un four, et est dans le cas d'utilisation de micro-ondes, séparée de la section suivante par un déflecteur suspendu à une paroi formant plafond de l'enceinte. Chaque section forme ainsi une chambre qui peut avantageusement être associée à plusieurs applicateurs de micro-ondes débouchant dans l'intérieur de la chambre.

Chaque mode de chauffage est commandé séparément de manière à pouvoir être combiné à volonté avec les autres modes de chauffage en fonction des aliments à préparer.

Ces tunnels de cuisson travaillent en continu et leur capacité est à titre indicatif d'environ 2500 portions en 7 heures de fonctionnement à 250°C, les aliments étant lors de la cuisson contenus dans des bacs disposés sur des chariots qui se déplacent à travers le tunnel à l'aide d'un convoyeur.

Dans les tunnels de cuisson, l'augmentation du débit horaire de production implique obligatoirement une augmentation de la longueur des tunnels qui, à titre indicatif peut atteindre 6 mètres ou encore plus.

Les tunnels sont assemblés à partir de segments alignés et reliés les uns aux autres par soudure. Chaque segment peut comporter une ou plusieurs sections de cuisson ou de chambres de cuisson.

La longueur exceptionnelle des tunnels pose à cet égard un problème puisque tous les modes de chauffage contribuent à élever la température des parois de l'enceinte, ce qui entraîne une dilatation de celles-ci.

Cette dilatation, qui est de l'ordre de 1 mm/m 100°C, provoque une déformation qui peut entraîner la rupture des soudures ou des tôles qui composent l'enceinte.

Pour les tunnels utilisant l'énergie micro-ondes et qui sont également concernés par l'invention, la conception doit en outre intégrer la notion d'étanchéité aux rayonnements électromagnétiques.

Dans les tunnels de cuisson utilisant le chauffage par micro-ondes, il est indispensable de prévoir à l'intérieur de l'enceinte des parois en matériaux réfléchissants tels que l'acier, mais aussi des assemblages qui assurent la continuité électromagnétique entre les différentes parties conductrices exposées au rayonnement.

Afin de diminuer le risque de ruptures dans les liaisons entre segments, on connaît un dispositif de raccordement consistant en l'interposition, entre les segments constitutifs d'un four tunnel, d'un soufflet métallique ayant pour fonction d'assurer la continuité du tunnel tout en autorisant une capacité de déformation qui est compensée en rétraction comme en allongement.

Or, ces soufflets présentent des inconvénients résidant essentiellement dans les détériorations qui apparaissent inévitablement en raison des fonctionnements alternés imposés. Des ruptures de fatigue de plis de soufflet interviennent, ce qui compromet l'économie de fonctionnement du tunnel, mais aussi la sécurité de l'appareil dans le cas de l'utilisation du mode de chauffage par micro-ondes.

L'invention a pour but de remédier à ces inconvénients en proposant un dispositif de raccordement simple et fiable qui résiste sans difficulté aux effets des rétractions et allongements des segments constitutifs de l'enceinte et qui par conséquent garantit l'étanchéité des connexions entre segments dans le temps.

L'invention a pour objet un dispositif de raccordement de deux segments successifs d'un four tunnel de cuisson d'aliments, caractérisé en ce qu'il comporte un premier manchon fixé au châssis du tunnel et au moins un deuxième manchon fixé à l'un des segments de tunnel, le deuxième manchon étant monté axialement coulissant par rapport au premier manchon, et des moyens d'étanchéité disposés entre les premier et deuxième manchons, dans l'épaisseur de ceux-ci, de façon à permettre un coulissement sans rupture de l'étanchéité.

Selon d'autres caractéristiques de l'invention:
- les deux segments successifs sont fixés à un deuxième manchon respectif, les deux deuxièmes manchons étant symétriquement disposés de part et d'autre du premier manchon;
- les moyens d'étanchéité comportent un joint d'étanchéité élastique disposé dans un logement ouvert vers l'intérieur du tunnel et délimité par des épaulements en regard des premier et deuxième manchons, ainsi que par une partie de manchon formant fond de ce logement;
- les épaulements sont suivis par des parties de manchons respectives s'étendant parallèlement l'une à l'autre dans le sens axial des premier et deuxième manchons, ces parties de manchons étant montées coulissantes l'une sur l'autre de manière à constituer des organes de guidage du deuxième manchon dans un coulissement axial par rapport au premier manchon;
- le dispositif est spécialement adapté aux fours tunnel utilisant l'énergie micro-ondes et il comporte en outre un piège quart d'onde logé dans l'épaisseur du premier manchon, à proximité des moyens d'étanchéité;
- le dispositif comporte en outre un corps absorbant les micro-ondes, également disposé dans l'épaisseur du premier manchon, à la suite du piège quart d'onde, ce corps absorbant remplissant tout l'espacement suivant l'épaisseur entre les premier et deuxième manchons;
- il comporte des moyens de guidage du deuxième manchon dans un coulissement axial par rapport au premier manchon comportant des plaques régulièrement disposées suivant le pourtour du dispositif de raccordement et intercalées entre le châssis du four tunnel et une partie de manchon du deuxième manchon;
- il comporte des moyens de guidage supplémentaire sous forme d'équerres fixées au deuxième manchon et prenant appui contre les faces externes des plaques;
- il présente une forme rectangulaire et il est disposé dans la partie inférieure du tunnel;
- les moyens d'étanchéité, le piège quart d'onde et le corps absorbant les micro-ondes comportent du silicone.

L'invention sera maintenant décrite à titre d'exemple en référence aux dessins annexés dans lesquels:
- La Figure 1 est une vue en coupe et en perspective d'un four tunnel comprenant entre deux segments un dispositif de raccordement suivant l'invention;
- La Figure 2 est une vue en coupe d'un four tunnel pourvu d'un dispositif suivant l'invention;
- La Figure 3 est une vue en coupe d'un dispositif suivant un mode de réalisation de l'invention;
- La Figure 4 est une vue en coupe suivant une variante du mode de réalisation de la figure 3;
- La Figure 5 montre en deux demi-vues en coupe les détails d'un dispositif de raccordement suivant un autre mode de réalisation de l'invention spécialement adapté aux fours tunnels utilisant les micro-ondes.

Les mêmes éléments dans les figures différentes portent les mêmes signes de référence.

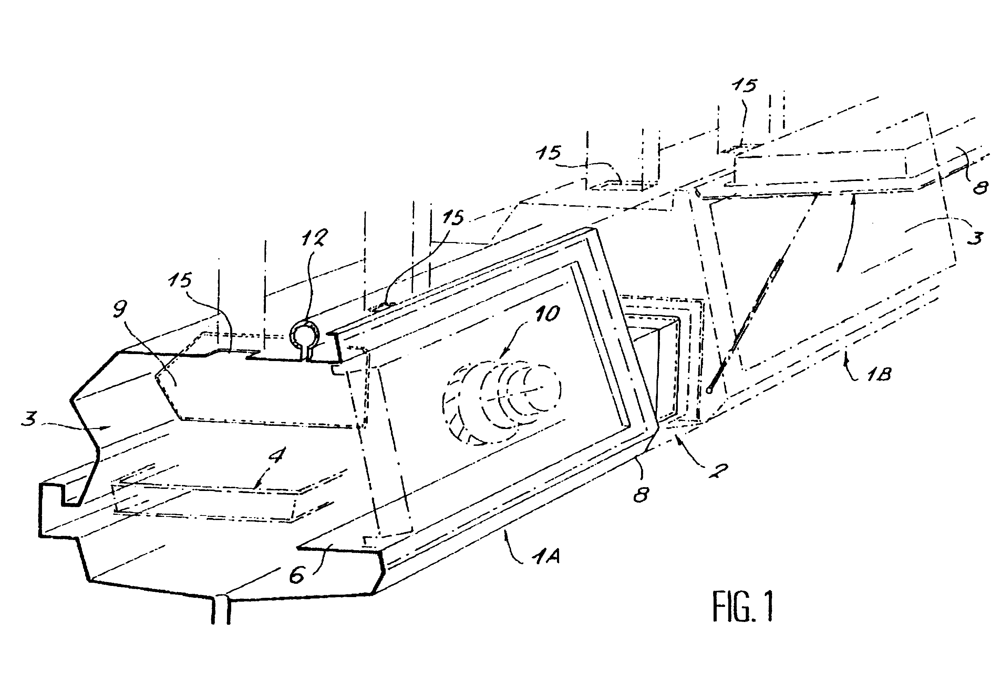

La figure 1 montre schématiquement deux segments 1A, 1B d'un four tunnel de cuisson d'aliments. Les deux segments sont reliés l'un à l'autre à l'aide du dispositif de raccordement 2 suivant l'invention.

Chaque segment 1A, 1B comporte une ou plusieurs sections de cuisson 3 alignées les unes sur les autres.

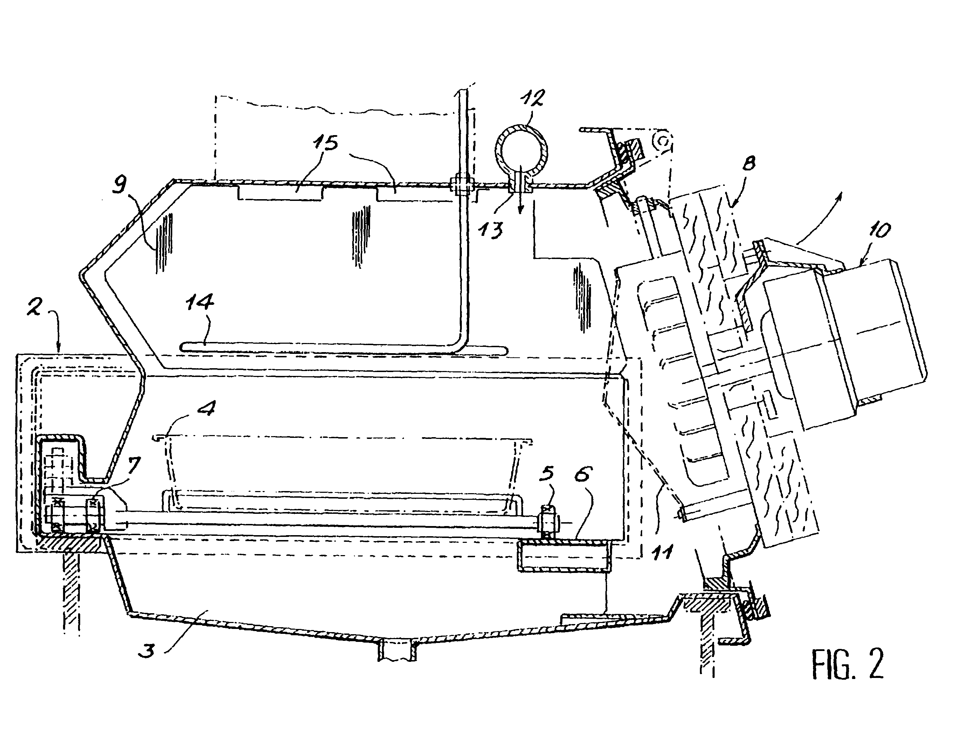

Les aliments à cuire sont de manière classique contenus dans des bacs 4, ces bacs étant disposés sur des chariots 5 déplacés le long d'un chemin de roulement 6 d'un convoyeur 7 qui traverse le tunnel (voir figure 2).

Le tunnel est pourvu de plusieurs portes d'accès 8 vers l'intérieur de celui-ci, en particulier pour le nettoyage journalier.

Chaque section de cuisson dans l'exemple illustré sur les figures 1 et 2 est séparée de la section suivante par une plaque s'étendant verticalement à partir du plafond du tunnel et qui forme un déflecteur pour micro-ondes, de sorte que chaque section constitue en effet une chambre délimitée dans sa partie haute.

Chaque section ou chambre de cuisson 3 est associée à plusieurs moyens de chauffage différents.

Ainsi, chaque section ou chambre de cuisson 3 est associée à un groupe de production d'air pulsé 10 comprenant une grille déflecteur 11 dirigée vers l'intérieur du tunnel.

Ces groupes de production d'air pulsé 10 sont avantageusement intégrés dans les portes d'accès 8 vers l'intérieur du tunnel.

Chaque section de cuisson 3 est dans l'exemple illustré sur les figures 1 et 2 associée à des moyens de distribution de vapeur 12 dans l'intérieur de la chambre 3. Ces moyens comportent des buses 13 débouchant dans les chambres.

Chaque section 3 peut en outre avantageusement être pourvue d'éléments producteurs de rayonnement infrarouge constitués par des résistances électriques blindées 14 suspendues à une hauteur convenable dans chaque chambre.

Le four tunnel est en outre avantageusement pourvu de moyens de cuisson par micro-ondes. Les micro-ondes permettent avant tout d'obtenir une plus grande rapidité de cuisson, l'efficacité de ce mode de chauffage étant immédiate.

Des applicateurs de micro-ondes 15 sont schématiquement indiqués sur les figures 1 et 2 et ils ne seront pas décrits plus en détail puisqu'ils sont parfaitement connus en soi.

Tous les modes de chauffage contribuent à élever la température à l'intérieur du tunnel jusqu'à une température de l'ordre de 250°. La température des parois du tunnel s'élève en conséquence, ce qui entraîne inévitablement une dilatation des parois de l'ordre de 1 mm/m·100°C.

Pour absorber cette dilatation, au moins certains segments de tunnel successifs sont reliés les uns aux autres à l'aide de dispositifs de raccordement suivant l'invention.

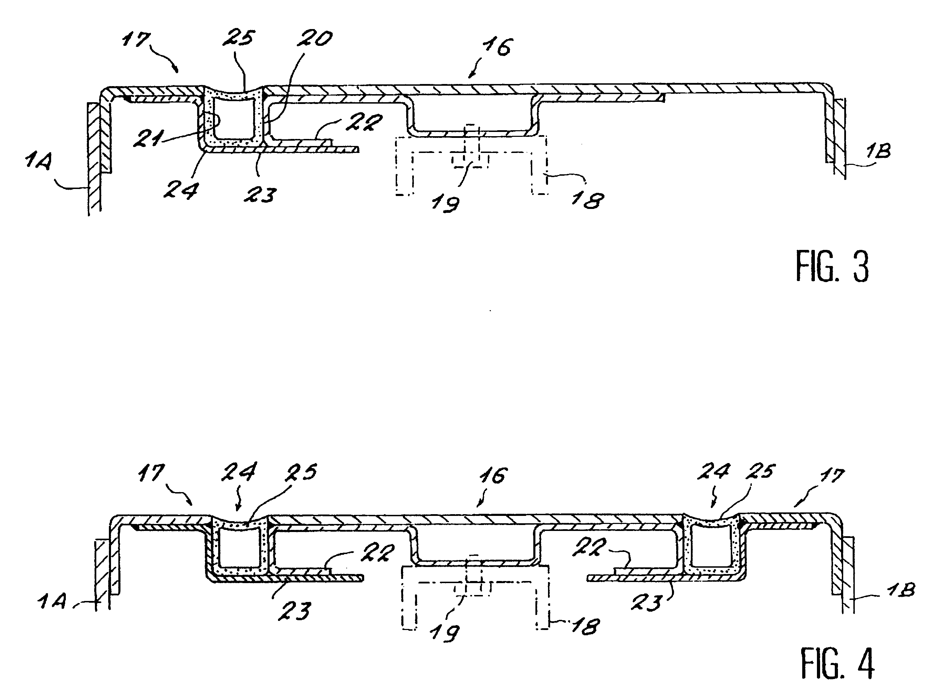

Un premier mode de réalisation d'un tel dispositif de raccordement est montré à la figure 3.

Chaque dispositif de raccordement comporte un premier manchon 16 et un deuxième manchon 17 dont le premier est fixé au châssis (schématiquement indiqué par le signe de référence 18) du tunnel par des moyens de fixation classique comme des vis 19, et également à l'un (1B) des segments successifs 1A, 1B du tunnel, alors que le deuxième manchon 17 est fixé à l'autre segment 1A.

Dans l'exemple illustré aux figures 1 et 2, les manchons 16, 17 sont disposés dans la partie inférieure du tunnel. Ils ont une forme adaptée pour permettre le passage des bacs 4 qui défilent sur le convoyeur 7. Cette forme est de préférence rectangulaire comme montré sur ces figures.

Les manchons 16, 17 peuvent également avoir une forme circulaire ou bien une forme correspondant à une section transversale des parois du tunnel pour constituer une continuation de celles-ci.

Les premier et deuxième manchons 16, 17 comportent des épaulements respectifs 20, 21 disposés en regard l'un de l'autre et dirigés suivant l'épaisseur des manchons vers l'extérieur du tunnel. Ces épaulements 20, 21 sont suivis par des parties de manchon respectives 22, 23 s'étendant parallèlement l'un à l'autre dans le sens axial des manchons.

Les parties de manchon 22, 23 sont dans l'exemple illustré montées coulissantes l'une sur l'autre de manière à constituer des organes de guidage du deuxième manchon 17 par rapport au premier manchon 16.

Les parties de manchon 22, 23 ont une longueur suffisante afin de permettre la formation d'un espacement 24 entre les épaulements 20, 21 tout en assurant le contact de guidage entre les parties de manchon 22, 23.

Il est prévu des moyens d'étanchéité comportant un joint d'étanchéité élastique 25 disposé dans l'espacement 24 formant un logement ouvert vers l'intérieur du tunnel et délimité, d'une part, par les épaulements en regard 20, 21, et d'autre part, par l'une (22) des parties de manchons formant le fond de ce logement. Le joint d'étanchéité est présent sur toute la périphérie interne du dispositif et il peut par exemple être fabriqué en silicone neutre.

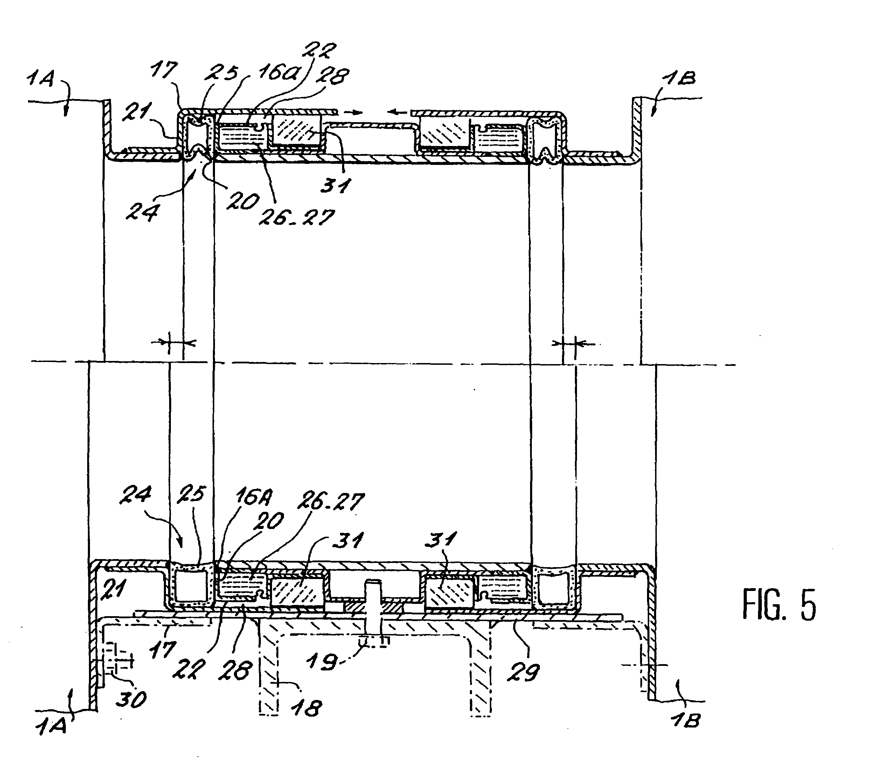

Lors de la dilatation des parois des segments de tunnel 1A, 1B provoquée par l'augmentation en température dans le tunnel pendant son fonctionnement, le segment 1A relié au deuxième manchon 17 repousse celui-ci vers le premier manchon 16 tout en comprimant le joint d'étanchéité élastique 25, comme cela est illustré en haut de la figure 5.

Le coulissement du deuxième manchon 17 par rapport au premier manchon 16 sous l'effet de la dilatation des parois du segment de tunnel correspondant 1A est ainsi rendu possible sans rupture de l'étanchéité et du contact coulissant entre les parties de manchon 22, 23.

La figure 4 montre une variante préférée de ce mode de réalisation. Dans cette variante, les deux segments de tunnel successifs 1A, 1B sont fixés à des deuxièmes manchons coulissants 17 disposés symétriquement de part et d'autre d'un premier manchon 17 fixé au châssis 18. Cet agencement apporte une capacité doublée d'absorption de la dilatation des parois du tunnel.

La figure 5 finalement montre un mode de réalisation du dispositif de raccordement spécialement adapté aux fours tunnels utilisant l'énergie micro-ondes, ces micro-ondes étant appliquées par les applicateurs 15 schématiquement illustrés aux figures 1 et 2.

Dans ce mode de réalisation, le dispositif de raccordement comporte en outre un piège quart d'onde 26 calculé selon les règles de l'électromagnétisme et comportant un corps en silicone neutre 27 logé dans l'épaisseur d'un premier manchon fixe 16A.

Le corps 27, qui dans l'exemple illustré sur la figure 5 est disposé dans un logement formé par une partie de manchon 22 du premier manchon 16, s'étend à l'intérieur de l'épaulement 20 et suit le pourtour de celui-ci de manière à former une boucle fermée.

La partie de manchon 22 du premier manchon 16A n'est pas dans le mode de réalisation illustré en contact de coulissement avec la partie de manchon 23 du deuxième manchon 17 de manière à laisser un passage 28 aux micro-ondes vers le piège quart d'onde 26.

Le dispositif comporte d'autres moyens de guidage du deuxième manchon 17 par rapport au premier manchon 16A. Il s'agit plus précisément de plaques 29 dont une est représentée en bas de la figure 5.

Ces plaques 29 sont régulièrement disposées suivant le pourtour du dispositif de raccordement et elles sont intercalées entre le châssis 18 du four tunnel et la partie de manchon 23 du manchon 17 correspondant. Elles sont en outre reliées au premier manchon par les moyens de fixation 19 de ce manchon au châssis.

Ces plaques 29 peuvent éventuellement être complétées par des moyens de guidage supplémentaires sous forme d'équerres 30 fixées aux deuxièmes manchons 17 et prenant appui contre les faces externes des plaques 29.

On obtient ainsi une continuité électromagnétique entre les segments 1A, 1B en passant par le dispositif de raccordement.

Afin d'améliorer davantage la protection contre d'éventuelles fuites de micro-ondes, le dispositif de raccordement est avantageusement pourvu d'un deuxième corps 31 similaire au premier corps 27 et également disposé dans l'épaisseur des manchons, après le premier corps. Ce corps 31 est en un matériau absorbant les micro-ondes tel que le silicone chargé, et remplit tout l'espacement suivant l'épaisseur entre les premier et deuxième manchons 16A, 17.

On obtient ainsi une réduction du rayonnement de micro-ondes à des valeurs tout à fait inoffensives.

Est ainsi obtenu suivant l'invention un dispositif de raccordement simple et fiable, qui ne présente pas de risque de rupture à cause des dilatations provoquées par les fluctuations de température dans le tunnel.

## Revendications

1. Dispositif de raccordement de deux segments successifs (1A, 1B) d'un four tunnel de cuisson d'aliments, caractérisé en ce qu'il comporte un premier manchon (16, 16A) fixé au châssis (18) du tunnel et au moins un deuxième manchon (17) fixé à l'un (1A, 1B) des segments de tunnel, le deuxième manchon (17) étant monté axialement coulissant par rapport au premier manchon (16), et des moyens d'étanchéité (25) disposés entre les premier (16, 16A) et deuxième (17) manchons, dans l'épaisseur de ceux-ci, de façon à permettre un coulissement sans rupture de l'étanchéité.

2. Dispositif de raccordement suivant la revendication 1, caractérisé en ce que les deux segments successifs (1A, 1B) sont fixés à un deuxième manchon respectif (17), les deux deuxièmes manchons étant symétriquement disposés de part et d'autre du premier manchon (16, 16A).

3. Dispositif de raccordement suivant la revendication 1 ou 2, caractérisé en ce que les moyens d'étanchéité comportent un joint d'étanchéité élastique (25) disposé dans un logement (24) ouvert vers l'intérieur du tunnel et délimité par des épaulements (20, 21) en regard des premier et deuxième manchons (16, 16A, 17), ainsi que par une partie de manchon formant fond de ce logement (24).

4. Dispositif de raccordement suivant la revendication 3, caractérisé en ce que les épaulements (20, 21) sont suivis par des parties de manchons respectives (22, 23) s'étendant parallèlement l'une à l'autre dans le sens axial des premier (16, 16A) et deuxième (17) manchons, ces parties de manchons (22, 23) étant montées coulissantes l'une sur l'autre de manière à constituer des organes de guidage du deuxième manchon (17) dans un coulissement axial par rapport au premier manchon (16, 16A).

5. Dispositif de raccordement suivant l'une quelconque des revendications 1 à 3 et spécialement adapté aux fours tunnel utilisant l'énergie micro-ondes, caractérisé en ce qu'il comporte en outre un piège quart d'onde (26) logé dans l'épaisseur du premier manchon (16A), à proximité des moyens d'étanchéité (25).

6. Dispositif de raccordement suivant la revendication 5, caractérisé en ce qu'il comporte en outre un corps (31) absorbant les micro-ondes, également disposé dans l'épaisseur du premier manchon (16A), à la suite du piège quart d'onde (26), ce corps absorbant (31) remplissant tout l'espacement suivant l'épaisseur entre les premier (16A) et deuxième (17) manchons.

7. Dispositif de raccordement suivant la revendication 5 ou 6, caractérisé en ce qu'il comporte des moyens de guidage du deuxième manchon (17) dans un coulissement axial par rapport au premier manchon comportant des plaques (29) régulièrement disposées suivant le pourtour du dispositif de raccordement et intercalées entre le châssis (18) du tunnel et une partie de manchon (23) du deuxième manchon (17).

8. Dispositif de raccordement suivant la revendication 7, caractérisé en ce qu'il comporte des moyens de guidage supplémentaire sous forme d'équerres (30) fixées au deuxième manchon (17) et prenant appui contre les faces externes des plaques (29).

9. Dispositif de raccordement suivant l'une quelconque des revendications précédentes, caractérisé en ce qu'il présente une forme rectangulaire et en ce qu'il est disposé dans la partie inférieure du tunnel.

10. Dispositif suivant les revendications 1, 5 et 6, caractérisé en ce que les moyens d'étanchéité (25), le piège quart d'onde (26) et le corps absorbant les micro-ondes (31) comportent du silicone.

## Patentansprüche

1. Vorrichtung zur Verbindung von zwei aufeinanderfolgenden Segmenten (1A, 1B) eines Tunnelofens zum Kochen von Nahrungsmitteln, **dadurch gekennzeichnet,** daß sie einen ersten Stutzen (16, 16A), der mit dem Gestell (18) des Tunnels verbunden ist, und mindestens einen zweiten Stutzen (17), der relativ zum ersten Stutzen (16) axial gleitend angeordnet ist, und Dichtmittel (25) aufweist, die zwischen den ersten (16, 16A) und den zweiten Stutzen (17) in der Tiefe so angeordnet sind, daß sie eine Gleitbewegung ohne Unterbrechung der Dichtheit ermöglichen.

2. Vorrichtung nach Anspruch 1, **dadurch gekennzeichnet**, daß die zwei aufeinanderfolgenden Segmente (1A, 1B) jeweils mit einem zweiten Stutzen (17) fest verbunden sind, wobei die zwei zweite Stutzen jeweils symmetrisch zu dem ersten Stutzen (16, 16A) angeordnet sind.

3. Vorrichtung nach Anspruch 1 oder 2, **dadurch gekennzeichnet**, daß die Dichtmittel einen elastischen Dichtstreifen (25) aufweisen, der in einem nach innen offenen Aufnahmeraum (24) des Tunnels angeordnet ist und von an den ersten und zweiten Stutzen (16, 16A, 17) gegenüberstehenden Schultern (20, 21) und von einem den Boden des Aufnahmeraums (24) bildenden Stutzenbereich begrenzt ist.

4. Vorrichtung nach Anspruch 3, **dadurch gekennzeichnet**, daß sich an die Schultern (20, 21) Stutzenbereiche (22, 23) anschließen, die sich parallel zueinander in axialem Sinn der ersten und zweiten Stutzen (16, 16A, 17) erstrecken, wobei die Stutzenbereiche (22, 23) aufeinander so gleitend angeordnet sind, daß sie Führungsorgane für den zweiten Stutzen (17) in einer Axialführung relativ zum ersten Stutzen (16, 16A) bilden.

5. Vorrichtung nach einem der Ansprüche 1 bis 3 und insbesondere an Tunnelöfen angepaßt, die mit Mikrowellen beheizbar sind, **dadurch gekennzeichnet,** daß sie zusätzlich eine Viertelwellenfalle (26) aufweist, die in der Tiefe des ersten Stutzens (16A) nahe bei den Dichtmitteln (25) angeordnet ist.

6. Vorrichtung nach Anspruch 5, **dadurch gekennzeichnet**, daß sie zusätzlich einen Körper (31) zum Absorbieren von Mikrowellen aufweist, der auch in der Tiefe des ersten Stutzens (16A) hinter der Viertelwellenfalle (26) angeordnet ist, wobei der Körper (31) zum Absorbieren den ganzen nachfolgenden Raum in der Tiefe zwischen den ersten (16A) und zweiten (17) Stutzen ausfüllt.

7. Vorrichtung nach Anspruch 5 oder 6, **dadurch gekennzeichnet,** daß sie Mittel zur Führung des zweiten Stutzens (17) in einer axialen Gleitbahn relativ zum ersten Stutzen aufweist, die entlang des äußeren Umfangs der Vorrichtung zum Verbinden regelmäßig angeordnete und zwischen dem Gestell (18) des Tunnels und einem Stutzenbereich (23) des zweiten Stutzens (17) eingefügte Platten (29) besitzen.

8. Vorrichtung nach Anspruch 7, **dadurch gekennzeichnet**, daß sie Hilfsmittel zur Führung in Winkelform (30) aufweist, die an dem zweiten Stutzen (17) befestigt sind und gegen die äußeren Oberflächen der Platten (29) anliegen.

9. Vorrichtung nach einem der vorangehenden Ansprüche, **dadurch gekennzeichnet,** daß sie rechtwinklige Gestalt aufweist und daß sie im unteren Bereich des Tunnels angeordnet ist.

10. Vorrichtung nach den Ansprüchen 1, 5 und 6, **dadurch gekennzeichnet**, daß die Dichtungsmittel (25), die Viertelwellenfalle (26) und der Körper (31) zum Absorbieren der Mikrowellen aus Silikon bestehen.

## Claims

1. Device for connecting two successive segments (1A, 1B) of a tunnel oven for cooking food products, characterised in that it comprises a first sleeve tube (16, 16A) secured to the frame (18) of the tunnel and at least one second sleeve tube (17) secured to one (1A, 1B) of the segments of the tunnel, the second sleeve tube (17) being mounted axially slidingly in relation to the first sleeve tube (16), and sealing means (25) arranged between the first (16, 16A) and the second (17) sleeve tubes in the thickness of the latter, in such a way as to permit sliding without breaking the seal.

2. Connecting device according to claim 1, characterised in that the two successive segments (1A, 1B) are secured to a second respective sleeve tube (17), the two second sleeve tubes being arranged symmetrically on either side of the first sleeve tube (16, 16A).

3. Connecting device according to claim 1 or 2, characterised in that the sealing means comprise an elastic sealing joint (25) arrangement in a housing (24) which is open towards the inside of the tunnel and delimited by shoulder walls (20, 21) with respect to the first and second sleeve tubes (16, 16A, 17) as well as by a section of the sleeve tube forming the base of the housing (24).

4. Connecting device according to claim 3, characterised in that the shoulder walls (20, 21) are followed by sections of respective sleeve tubes (22, 23) extending parallel to one another in the axial direction of the first (16, 16A) and second (17) sleeve tubes, said sections of the sleeve tubes (22, 23) being slidingly mounted on each other so as to form guiding members of the second sleeve tube (17) in an axial slide in relation to the first sleeve tube (16, 16A).

5. Connecting device according to any one of claims 1to 3 and especially adapted to tunnel ovens using microwave energy, characterised in that it also comprises a quarter-wave trap (26) mounted in the thickness of the first sleeve tube (16A) next to the sealing means (25).

6. Connecting device according to claim 5, characterised in that it also comprises a body (31) which absorbs microwaves, also mounted in the thickness of the first sleeve tube (16A), after the quarter-wave trap (26), said absorbing body (31) filling all the space of the thickness between the first (16A) and second (17) sleeve tubes.

7. Connecting device according to claim 5 or 6, characterised in that it comprises guiding means for the second sleeve tube (17) in an axial slide in relation to the first sleeve tube comprising plates (29) arranged regularly around the circumference of the connecting device and interposed between the frame (18) of the tunnel and a section of the sleeve (23) of the second sleeve tube (17).

8. Connecting device according to claim 7, characterised in that it comprises additional guiding means in the form of squares (30) secured to the second sleeve tube (17) and bearing against the external faces of the plates (29).

9. Connecting device according to any one of the preceding claims, characterised in that has a rectangular shape and in that it is arranged in the lower part of the tunnel.

10. Device according to claims 1, 5 and 6, characterised in that the sealing means (25), the quarter-wave trap (26) and the body absorbing the microwaves (31) are made of silicone.
